# EUROPEAN PATENT APPLICATION

(11) **EP 2 487 391 A1**
(43) Date of publication of application: **15.08.2012**
(21) Application number: 10821861.1
(22) Date of filing: 22.09.2010
(51) Int. Cl.: F16J 15/18, F16J 15/32

(54) **SEAL DEVICE**

(30) Priority: 07.10.2009 JP 2009233037
(71) Applicant: NOK Corporation, Minato-ku Tokyo 105-8585 (JP)
(72) Inventor: TADANO Hikaru, Kitaibaraki-shi Ibaraki 319-1535 (JP); MONMA Hiroaki, Kitaibaraki-shi Ibaraki 319-1535 (JP); SEKINE Shigeo, Kitaibaraki-shi Ibaraki 319-1535 (JP)
(74) Representative: Gulde Hengelhaupt Ziebig & Schneider
(86) International application number: PCT/JP2010/066398
(87) International publication number: WO 2011/043190

(57) **Abstract**

[Object] To provide a sealing device, which is capable of keeping a higher sealability even when a fluid pressure is not applied and even just after starting of application of the fluid pressure, and which is capable of reducing a sliding resistance while keeping a sealability during operation where the fluid pressure is always applied thereto. [Solving means] A sealing device (1) to be fitted in an annular groove (31) formed in one of a housing and a shaft as sliding members, respectively, where the housing has a shaft hole, and the shaft is inserted through the shaft hole and is configured to conduct a sliding movement relative to the housing, so that the sealing device seals an annular clearance (40) between the housing and the shaft from a fluid;
wherein the sealing device comprises: a seal ring portion (11) having a sliding surface configured to be slid with the mating sliding member (20), and to seal the annular clearance (40) when a fluid pressure is applied to the sealing device; and a hermetic closure portion (12) for hermetically closing between the seal ring portion (11) and the annular groove (31) when the fluid pressure is not applied to the sealing device; and
wherein the hermetic closure portion (12) is provided to be deformable in a direction for releasing the hermetically closed state between the seal ring portion (11) and the annular groove (31), by means of the fluid pressure when the fluid pressure is applied to the sealing device.

## Description

### TECHNICAL FIELD

The present invention relates to a sealing device for preventing leakage of a fluid from between opposite sliding members configured to conduct a relative reciprocative movement or relative rotational movement therebetween, and more particularly to a sealing device capable of reducing a sliding resistance thereof during operation where a fluid pressure is applied thereto, while ensuring a sealability.

### BACKGROUND ART

For example, as a sealing device for preventing leakage of a fluid from between opposite sliding members configured to conduct a relative reciprocative movement or relative rotational movement therebetween, such as a seal for rotation in an AT (automatic transmission), CVT (continuously variable transmission), or the like, a seal ring 100 has been mainly used as shown in FIG. 17, which comprises an annular body made of resin (Patent Document 1).

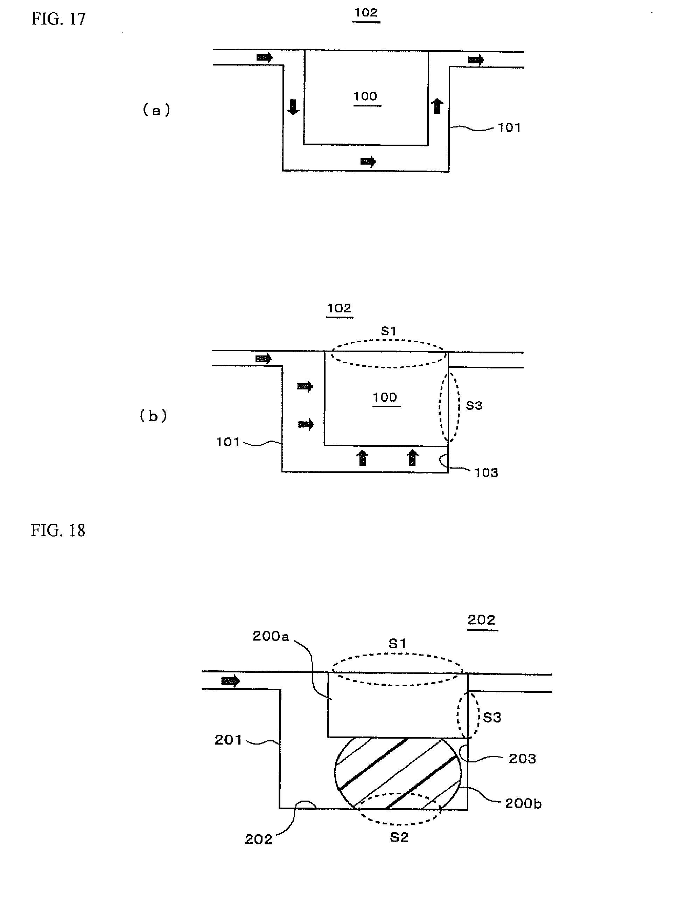

This seal ring 100 is fitted in an annular groove 101 and closely contacted with a mating sliding member 102 as shown in FIG. 17(a). However, in an unloaded state where a fluid pressure is not applied, a leaking flow passage is caused to be formed, for a fluid which flows from a high pressure side (left side in the figure) of the fluid, through a gap between the seal ring 100 and the annular groove 101, and then exits toward a low pressure side (right side in the figure) as indicated by arrows in the figure, thereby failing to exhibit a sealing function. Nonetheless, the seal ring 100 is configured to exhibit a sealing function, when the seal ring is subjected to application of a fluid pressure as shown in FIG. 17(b) where the seal ring 100 is urged by the fluid pressure against a sidewall surface 103 at a low pressure side in the annular groove 101 such that the seal ring is closely contacted, at two surfaces thereof comprising a closely contacted area S1 between it and the mating sliding member 102 and a closely contacted area S3 between it and the sidewall surface 103 of the annular groove 101, with them, respectively.

Such a sealing device is subjected to formation of the leaking flow passage during the unloaded state of the fluid to thereby fail to exhibit the sealing function. Thus, in case that the fluid is an oil to be pumped by a hydraulic pump such as in case of an AT, CVT, or the like, the oil having been sealed by the seal ring is caused to be returned to an oil pan through the leaking flow passage in the unloaded state where the hydraulic pump is stopped, such that the seal ring is subjected to depletion of oil therearound. Therefore, when the oil pressure is started to be applied in this state, such as just after starting of an engine, the sealing device is caused to start its operation in a state without lubrication around the seal ring, thereby problematically deteriorating the responsibility, operability, and the like.

Thus, as a sealing device to be particularly utilized at a location requiring a higher sealability even in an unloaded state, there has been conventionally adopted a sealing device comprising a combined seal including: a slide ring 200a to be slid with a mating sliding member 202; and a rubber-like elastic body 200b combined with the slide ring; as shown in FIG. 18 (Patent Document 2).

Such a sealing device is configured to be mounted in a manner to arrange the rubber-like elastic body 200b in the annular groove 201 at its groove bottom surface 202 side and to cause the rubber-like elastic body 200b to exhibit a predetermined squeeze, such that the sealing device is closely contacted, at three surfaces thereof comprising a closely contacted area S1 between the slide ring 200a and the mating sliding member 202, a closely contacted area S3 between the slide ring 200a and a sidewall surface 203 of the annular groove 201, and a closely contacted area S2 between the rubber-like elastic body 200b and the groove bottom surface 202 of the annular groove 201, with them, respectively, to thereby prevent formation of a leaking flow passage through the annular groove 201, thereby enabling to keep the sealability even when the fluid pressure is not applied and even just after starting of application of the fluid pressure.

### PRIOR ART DOCUMENT:

### PATENT DOCUMENT:

Patent Document 1: JP-A-2001-141065
Patent Document 2: JP-A-2007-107571

### DISCLOSURE OF THE INVENTION

### PROBLEM TO BE SOLVED BY THE INVENTION

However, in case of adopting such a conventional sealing device comprising the combined seal, the sealing device is always closely contacted, at its three surfaces comprising the sealing portions S1, S2, and S3, with the mating members, respectively, thereby problematically increasing a sliding resistance of the sealing device during operation, whether the fluid pressure is applied or not applied thereto. The sliding resistance increased in this way brings about a serious problem, particularly when the sealing device is adopted in a drive system of a part of an automobile, such that the automobile is deteriorated in fuel cost performance.

It is therefore an object of the present invention to provide a sealing device, which is capable of keeping a higher sealability even when a fluid pressure is not applied and even just after starting of application of the fluid pressure, and which is capable of reducing a sliding resistance while keeping a sealability during operation where the fluid pressure is always applied thereto.

Other objects of the present invention will become apparent from the following description.

### MEANS FOR SOLVING PROBLEM

The above object is carried out by the following inventions.

The invention of claim 1 resides in a sealing device to be fitted in an annular groove formed in one of a housing and a shaft as sliding members, respectively, where the housing has a shaft hole, and the shaft is inserted through the shaft hole and is configured to conduct a sliding movement relative to the housing, so that the sealing device seals an annular clearance between the housing and the shaft from a fluid;
wherein the sealing device comprises: a seal ring portion having a sliding surface configured to be slid with the mating sliding member, and to seal the annular clearance when a fluid pressure is applied to the sealing device; and a hermetic closure portion for hermetically closing between the seal ring portion and the annular groove when the fluid pressure is not applied to the sealing device; and
wherein the hermetic closure portion is provided to be deformable in a direction for releasing the hermetically closed state between the seal ring portion and the annular groove, by means of the fluid pressure when the fluid pressure is applied to the sealing device.

The invention of claim 2 resides in the sealing device according to claim 1, wherein the hermetic closure portion is formed in a shape of a lip obliquely extending from the seal ring portion toward an inner wall surface of the annular groove; and
wherein the lip-shaped hermetic closure portion is provided: to be abutted on the inner wall surface of the annular groove to thereby hermetically close between the seal ring portion and the annular groove when the fluid pressure is not applied; and to be flexibly deformable in a direction for releasing the hermetically closed state between the seal ring portion and the annular groove, when the fluid pressure is applied.

The invention of claim 3 resides in the sealing device according to claim 2, further comprising a hermetic confining portion for hermetically confining a groove portion defmed between the seal ring portion and the hermetic closure portion, upon flexible deformation of the hermetic closure portion when the fluid pressure is applied.

The invention of claim 4 resides in the sealing device according to claim 3, wherein the hermetic confining portion is constituted of a tip end portion of the hermetic closure portion; and
wherein the tip end portion is formed so that the tip end portion is abutted on the inner wall surface of the annular groove to thereby hermetically confine the groove portion, between the tip end portion and the inner wall surface, against a flow of the fluid into the groove portion, upon flexible deformation of the hermetic closure portion when the fluid pressure is applied.

The invention of claim 5 resides in the sealing device according to claim 3, wherein the hermetic confining portion comprises an O-ring provided in the grooved portion separately therefrom; and
wherein the O-ring is formed so that the O-ring is clamped between the seal ring portion and the hermetic closure portion to thereby hermetically confine the groove portion against a flow of the fluid thereinto, upon flexible deformation of the hermetic closure portion when the fluid pressure is applied.

The invention of claim 6 resides in the sealing device according to claim 2, further comprising a cross-sectionally annular spring member, disposed in a groove portion defined between the seal ring portion and the hermetic closure portion, so as to exert an urging force on the hermetic closure portion to abut it on a groove bottom surface of the annular groove.

The invention of claim 7 resides in the sealing device according to claim 2, further comprising a cross-sectionally sideways V-shaped spring member buried in and extended through the seal ring portion and the hermetic closure portion, so as to urge the hermetic closure portion toward the inner wall surface of the annular groove.

The invention of claim 8 resides in the sealing device according to any one of claims 1 to 7, wherein the hermetic closure portion is formed of a rubber-like elastic body, which is separate from the seal ring portion and which is integrally bonded to the seal ring portion.

The invention of claim 9 resides in the sealing device according to any one of claims 1 to 8, wherein the hermetic closure portion is arranged at that side of the seal ring portion which is faced to a groove bottom surface of the annular groove, so as to hermetically close between the seal ring portion and the groove bottom surface of the annular groove when the fluid pressure is not applied.

The invention of claim 10 resides in the sealing device according to any one of claims 1 to 8, wherein the hermetic closure portion is juxtaposed with the seal ring portion in an axial direction thereof, so as to hermetically close between the seal ring portion and a sidewall surface of the annular groove when the fluid pressure is not applied.

The invention of claim 11 resides in the sealing device according to claim 1, wherein the seal ring portion has a flange portion extending, from the sliding surface configured to be slid with the mating sliding member, toward a groove bottom surface of the annular groove;
wherein the hermetic closure portion comprises a rubber-like elastic body which is separate from the seal ring portion and which is formed into a lip shape obliquely extending from the groove bottom surface of the annular groove toward an inner surface of the flange portion; and
wherein the lip-shaped hermetic closure portion is provided: to be abutted on the inner surface of the flange portion to thereby hermetically close between the seal ring portion and the annular groove when the fluid pressure is not applied; and to be separated from the flange portion in a manner to be flexibly deformable in a direction for releasing the hermetically closed state between the seal ring portion and the annular groove, when the fluid pressure is applied.

The invention of claim 12 resides in the sealing device according to claim 1, wherein the hermetic closure portion comprises an annular rubber-like elastic body, and a gas-encapsulating portion for retaining a shape of the rubber-like elastic body; and
wherein the gas-encapsulating portion is configured to: retain the rubber-like elastic body in the annular groove, in a shape to hermetically close between the seal ring portion and the annular groove when the fluid pressure is not applied; and be compressed in compliance with deformation of the rubber-like elastic body in a direction for releasing the hermetically closed state between the seal ring portion and the annular groove when the fluid pressure is applied.

The invention of claim 13 resides in the sealing device according to claim 12, wherein the rubber-like elastic body is arranged between the seal ring portion and a groove bottom surface of the annular groove to thereby cover up the groove bottom surface; and
wherein the gas-encapsulating portion is formed by encapsulating a gas between the rubber-like elastic body and the groove bottom surface.

The invention of claim 14 resides in the sealing device according to claim 12, wherein the rubber-like elastic body is formed to be hollow; and
wherein the gas-encapsulating portion is formed by encapsulating a gas in the interior of the rubber-like elastic body.

The invention of claim 15 resides in the sealing device according to claim 14, wherein the hermetic closure portion is provided separately from the seal ring portion, at that side of the seal ring portion which is faced to a groove bottom surface of the annular groove, and the hermetic closure portion hermetically closes between the seal ring portion and an inner wall surface of the annular groove when the fluid pressure is not applied.

The invention of claim 16 resides in the sealing device according to claim 14, wherein the hermetic closure portion is integrally bonded to the seal ring portion, so as to hermetically close between it and the inner wall surface of the annular groove when the fluid pressure is not applied.

The invention of claim 17 resides in the sealing device according to claim 16, wherein the hermetic closure portion is integrally bonded to that circumferential surface of the seal ring portion which is faced to a groove bottom surface of the annular groove, and the hermetic closure portion hermetically closes between the seal ring portion and the groove bottom surface of the annular groove when the fluid pressure is not applied.

The invention of claim 18 resides in the sealing device according to claim 16, wherein the hermetic closure portion is juxtaposed with the seal ring portion in an axial direction thereof and integrally bonded thereto, and the hermetic closure portion hermetically closes between the seal ring portion and a sidewall surface of the annular groove when the fluid pressure is not applied.

The invention of claim 19 resides in the sealing device according to any one of claims 12 to 18, wherein the rubber-like elastic body is formed with a hermetically closing region in a shape of cross-sectional protrusion to be operable when the fluid pressure is not applied.

### EFFECT OF THE INVENTION

According to the present invention, it is allowed to provide a sealing device, which is capable of keeping a higher sealability even when a fluid pressure is not applied and even just after starting of application of the fluid pressure, and which is capable of reducing a sliding resistance while keeping a sealability during operation where the fluid pressure is always applied thereto.

### BRIEF DESCRIPTION OF THE DRAWINGS

FIG. 1 is a cross-sectional view of an embodiment of a sealing device according to the present invention;
FIG. 2 is a cross-sectional view of another embodiment comprising a seal ring portion, and a hermetic closure portion formed separately therefrom;
FIG. 3 is a cross-sectional view of a further embodiment comprising a seal ring portion, and a hermetic closure portion integrally bonded to an axial end side thereof;
FIG. 4 is a cross-sectional view of a yet another embodiment comprising a seal ring portion, and a hermetic closure portion integrally bonded to an axial end side thereof;
FIG. 5 is a cross-sectional view of another embodiment of a hermetic confining portion;
FIG. 6 is a cross-sectional view of a still further embodiment of a sealing device in case of adopting an O-ring as a hermetic confining portion;
FIG. 7 is a cross-sectional view of an embodiment comprising a cross-sectionally annular spring member disposed in a groove portion of the sealing device shown in FIG. 1;
FIG. 8 is a cross-sectional view of an another embodiment comprising a buried cross-sectionally sideways V-shaped spring member, adopted instead of the O-ring in the sealing device shown in FIG. 6;
FIG. 9 is a cross-sectional view of a further embodiment of a sealing device adopting a cross-sectionally sideways V-shaped spring member;
FIG. 10 is a cross-sectional view of a still another embodiment of a sealing device comprising a seal ring portion, and a hermetic closure portion formed separately therefrom;
FIG. 11 is a cross-sectional view of an embodiment of a sealing device having a gas-encapsulating portion;
FIG. 12 is a cross-sectional view of another embodiment of a sealing device having a gas-encapsulating portion;
FIG. 13 is a cross-sectional view of a still another embodiment of a sealing device having a gas-encapsulating portion;
FIG. 14 is a cross-sectional view of an embodiment of a sealing device having a hollow rubber-like elastic body;
FIG. 15 is a cross-sectional view of another embodiment of a sealing device having a hollow rubber-like elastic body;
FIG. 16 is a cross-sectional view of a further embodiment of a sealing device having a hollow rubber-like elastic body;
FIG. 17 is a cross-sectional view of a conventional sealing device comprising a seal ring only; and
FIG. 18 is a cross-sectional view of a conventional sealing device comprising a combined seal.

### EXPLANATION OF LETTERS OR NUMERALS

- 1:: sealing device
11: seal ring portion
12: hermetic closure portion
13: groove portion
- 20:: sliding member
- 30:: sliding member
- 31:: annular groove
- 40:: annular clearance

### BEST MODE(S) FOR CARRYING OUT THE INVENTION

Embodiments of the present invention will be described in detail hereinafter.

The sealing device according to the present invention is to be fitted in an annular groove formed in one of a housing and a shaft as sliding members, respectively, where the housing has a shaft hole, and the shaft is inserted through the shaft hole and is configured to conduct a sliding movement relative to the housing, so that the sealing device seals an annular clearance between the housing and the shaft from a fluid; wherein the sealing device comprises: a seal ring portion having a sliding surface configured to be slid with the mating sliding member, and to seal the annular clearance when a fluid pressure is applied to the sealing device; and a hermetic closure portion for hermetically closing between the seal ring portion and the annular groove when the fluid pressure is not applied to the sealing device. The hermetic closure portion is provided to be deformable in a direction for releasing the hermetically closed state between the seal ring portion and the annular groove, by means of the fluid pressure when the fluid pressure is applied to the sealing device.

Namely, the hermetic closure portion hermetically closes between the seal ring portion and the annular groove in an unloaded state where the fluid pressure is not applied, thereby assuredly preventing formation of a leaking flow passage of a fluid in the annular groove between the hermetic closure portion and the seal ring portion such that a high pressure side and a low pressure side of the fluid bounded by the sealing device is communicated with each other through the leaking flow passage, even just after starting of application of the fluid pressure. Thus, the sealing device is capable of keeping a higher sealability even in a state where the fluid pressure is not applied thereto, to the same degree as the conventional sealing device comprising the combined seal, at least by virtue of the sliding surface of the seal ring portion for the mating sliding member, and by virtue of the hermetically closing region provided by the hermetic closure portion between the seal ring portion and the annular groove.

Further, in the state where the fluid pressure is applied, the seal ring portion seals the annular clearance between the housing and the shaft, and the hermetic closure portion is deformed by this fluid pressure in a manner to release the hermetically closed state between the seal ring portion and the annular groove, so that the hermetically closing region provided by the hermetic closure portion never causes a large sliding resistance upon operation of the sliding members. Thus, during the operation where the fluid pressure is always applied, the sliding resistance is reduced while keeping the sealability, thereby enabling to restrict the sliding resistance to the same degree as the existing sealing device comprising the seal ring only as shown in FIG. 17.

Thus, it is allowed to prevent fluid leakage when the fluid pressure is not applied, without increasing the sliding resistance of the sealing device during operation, which fluid leakage has been a drawback of a conventional sealing device comprising a seal ring only.

The hermetic closure portion can be provided in various configurations. For example, it can be formed in a shape of a lip obliquely extending from the seal ring portion toward an inner wall surface of the annular groove.

This lip-shaped hermetic closure portion is provided: to be abutted on the inner wall surface of the annular groove to thereby hermetically close between the seal ring portion and the inner wall surface of the annular groove when the fluid pressure is not applied; and to be flexibly deformable in a direction for releasing the hermetically closed state between the seal ring portion and the inner wall surface of the annular groove, when the fluid pressure is applied. Thus, when the fluid pressure is applied, the lip-shaped hermetic closure portion is flexibly deformed, such that the hermetic closure portion is kept from being slid with the sliding member when the mating sliding member is operated, thereby reducing the sliding resistance.

The sealing device according to the present invention is applicable to both of a configuration where the sliding surface of the seal ring portion is provided by its outer circumferential surface side, and a configuration where the sliding surface is provided by an inner circumferential surface side, unless otherwise particularly specified.

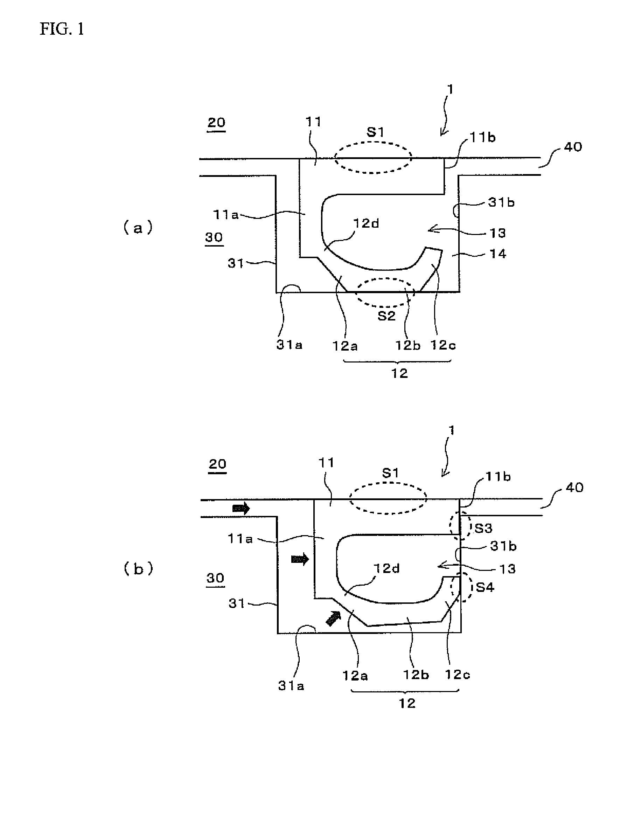

FIG. 1 is a cross-sectional view of an embodiment of a sealing device according to the present invention. Reference numeral 1 therein designates a sealing device, and the sealing device 1 is fitted in an annular groove 31 formed in one sliding member 30 of sliding members 20 and 30 to be slid with each other, so as to hermetically close an annular clearance 40 defined therebetween. Described herein as an example is a situation where the sliding member 20 is a housing, the sliding member 30 is a shaft, and the annular groove 31 is concavedly provided on an outer circumferential surface of the sliding member 30.

It is noted that, in all embodiments to be illustrated hereinafter, the annular clearance 40 is subjected to application of a fluid pressure, in a direction from the left to the right, in each figure.

In the sealing device 1, reference numeral 11 designates a seal ring portion and reference numeral 12 designates a hermetic closure portion in a lip shape, and the seal ring portion 11 is configured to have a sliding surface for the sliding member 20, which sliding surface is opposite to the hermetic closure portion 12.

Typically, the seal ring portion 11 can be formed of a resin such as: a copolymer of polytetrafluoroethylene, tetrafluoroethylene, and perfluoro (alkyl vinyl ether); a copolymer of tetrafluoroethylene and hexafluoropropylene; polyamide (nylon); and the like.

The lip-shaped hermetic closure portion 12 is formed of the same resin as that of the seal ring portion 11 integrally therewith, and the hermetic closure portion has: an inclined portion 12a extending, from a lower end of a flange portion 11 a downwardly and vertically extending from an axial left end of the seal ring portion 11 toward a groove bottom surface 31a of the annular groove 31, toward the groove bottom surface 31a; a flattened portion 12b extending from a tip end of the inclined portion 12a, along the groove bottom surface 31a and parallelly to the seal ring portion 11; and a rising-up portion 12c slightly rising up from a tip end of the flattened portion 12b toward the seal ring portion 11 side.

This causes the sealing device 1 to have a cross-sectionally sideways U-shaped grooved portion 13 defined between the seal ring portion 11 and hermetic closure portion 12, and the sealing device 1 is fitted in the annular groove 31 and positioned such that the grooved portion 13 is arranged at a low pressure side (right side in the figure) of the fluid.

In the hermetic closure portion 12, its region connecting between the flange portion 11a and inclined portion 12a is configured as a flexible deforming portion 12d formed to be thinner than the other portions, and those portions of the hermetic closure portion, which are distal to the flexible deforming portion 12d, are made to be deformable toward the seal ring portion 11 side, i.e., in a direction apart from the groove bottom surface 31a of the annular groove 31.

Here, the sealing device 1 is fitted between the sliding member 20 and the groove bottom surface 31 a of the sliding member 30 with a predetermined interference and a predetermined squeeze, in a manner to seal between the sliding members 20, 30 by a closely contacted area S 1 between the seal ring portion 11 and the sliding member 20 and by a closely contacted area S2 between the flattened portion 12b of the hermetic closure portion 12 and the groove bottom surface 31a of the annular groove 31, so as to prevent formation of a leaking flow passage in the annular clearance 40 in an unloaded state where the fluid pressure is not exerted.

The hermetic closure portion 12 is configured so that the tip end of the rising-up portion 12c is positioned inwardly (left side in the figure) of a right side end 11b of the seal ring portion 11 in the figure at the same side as the tip end in the axial direction of the sealing device 1 in a state where the fluid pressure is not applied as shown in FIG. 1(a), in a manner that the tip end of the rising-up portion 12c does not abut on the sidewall surface 31b to thereby form a slight gap 14 therebetween, even when the end 11b of the seal ring portion 11 abuts on a right side sidewall surface 31 b of the annular groove 31 in the figure when the sealing device is provided.

Thus, when the sealing device 1 is subjected to application of the fluid pressure such that the pressure of the fluid flowed from the annular clearance 40 into the annular groove 31 acts, from the groove bottom surface 31a, on the inclined portion 12a of the hermetic closure portion 12, the hermetic closure portion 12 is flexibly deformed toward the seal ring portion 11 about the flexible deforming portion 12d as a fulcrum, so that the hermetic closure portion 12 is separated from the groove bottom surface 31a of the annular groove 31 (FIG. 1(b)).

At this time, the seal ring portion 11 is closely contacted with the sidewall surface 31b of the annular groove 31 by the fluid pressure to thereby constitute a closely contacted area S3 in a manner to seal the annular clearance 40 together with the closely contacted area S1, while releasing the closely contacted state between the flattened portion 12b of the hermetic closure portion 12 and the groove bottom surface 31a to thereby terminate the closely contacted area S2, so that the sliding resistance between sliding members 20, 30 during a sliding operation thereof is restricted to the same degree of sliding resistance as that to be exhibited by an existing sealing device comprising a seal ring only.

When the hermetic closure portion 12 is separated from the groove bottom surface 31a upon application of the fluid pressure, it is likely that the fluid flows into the grooved portion 13 in a manner to exert a force on the hermetic closure portion 12 tending to deform it in a direction abutting onto the groove bottom surface 31 a so that the force flexibly reforming the hermetic closure portion 12 is lowered. It is therefore preferable that the hermetic closure portion 12 is configured so that the tip end of the rising-up portion 12c is abutted onto the sidewall surface 31b of the annular groove 31 to thereby form a closely contacted area S4 such that the grooved portion 13 is hermetically confined, upon flexible deformation of the hermetic closure portion 12 as shown in FIG. 1(b), in a manner to prevent the fluid from flowing into the grooved portion 13, thereby achieving the function to stably lower the sliding resistance.

In the embodiment shown in FIG. 1, the tip end of the rising-up portion 12c of the hermetic closure portion 12 is configured to constitute, upon flexible deformation of the hermetic closure portion 12, the hermetic confining portion for hermetically confining the grooved portion 13 to be defined between the seal ring portion 11 and the hermetic closure portion 12.

It is also possible to form the hermetic closure portion 12 from a member separate from the seal ring portion 11.

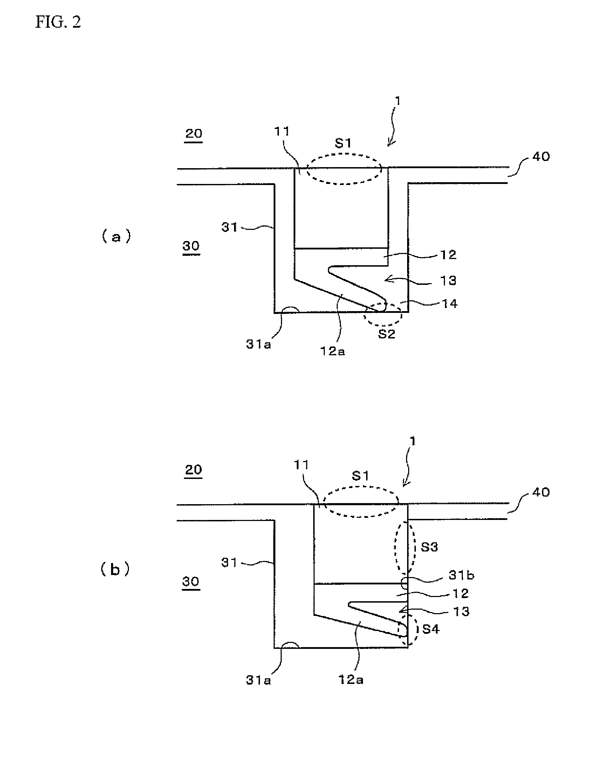

FIG. 2 shows another embodiment comprising a seal ring portion 11, and a hermetic closure portion 12 formed separately therefrom.

This hermetic closure portion 12 is formed of a rubber-like elastic body into a cross-sectionally sideways V-shape, and is integrally bonded to that surface of the seal ring portion 11, which is opposite to a sliding surface thereof against the sliding member 20. In this way, the tip end of the hermetic closure portion 12 is constituted as an inclined portion 12a obliquely and straightly extending from the seal ring portion 11 toward the groove bottom surface 31a of the annular groove 31, such that the tip end abuts on the groove bottom surface 31a to thereby form a closely contacted area S2 when the fluid pressure is not applied (FIG. 2(a)), while the whole of the inclined portion 12a is elastically deformed and flexed such that the tip end thereof is separated from the groove bottom surface 31a to thereby terminate the hermetically closed state when the fluid pressure is not applied (FIG. 2(b)).

Since it is possible in this embodiment to adopt an optimum material for the hermetic closure portion 12 differently from the seal ring portion 11 and to integrate the hermetic closure portion 12 with the seal ring portion 11 (into a single part) by bonding, it is also easy to fit them into the annular groove 31.

It is preferable in this embodiment as well, to constitute the hermetic confining portion by the tip end portion of the inclined portion 12a of the hermetic closure portion 12, and thus the hermetic closure portion 12 is so configured that the tip end of the inclined portion 12a abuts onto the sidewall surface 31b of the annular groove 31 to thereby form the closely contacted area S4 in a manner to hermetically confine the grooved portion 13, upon flexible deformation of the hermetic closure portion 12.

In the embodiment as shown in FIG. 2 where the hermetic closure portion 12 is integrated with the seal ring portion 11 by bonding, the hermetic closure portion 12 is not limited to a configuration where the same is bonded to a circumferential surface side of the seal ring portion 11, and may be integrally bonded to an axial end side of the seal ring portion 11.

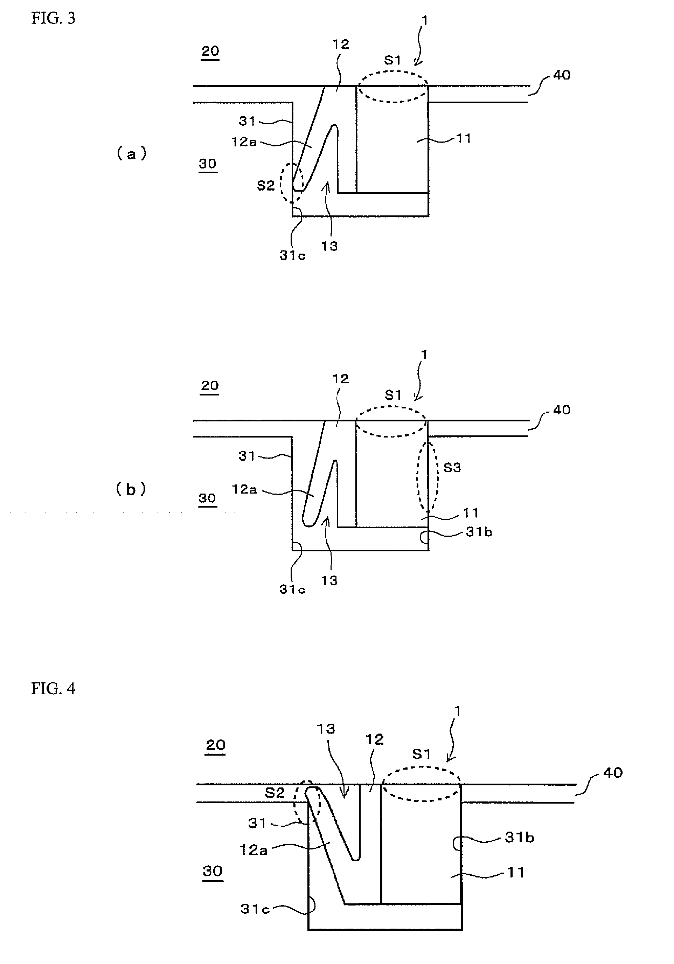

FIG. 3 shows an embodiment where such a hermetic closure portion 12 is bonded to an axial end side of the seal ring portion 11 integrally and juxtaposedly with the same.

In this case, the hermetic closure portion 12 is arranged at a high pressure side (left side in the figure) of the fluid in the axial direction of the seal ring portion 11, in a manner to form a closely contacted area S2 for hermetically closing between the seal ring portion 11 and the sidewall surface 31c of the annular groove 31 when the fluid pressure is not applied (FIG. 3(a)), while the hermetic closure portion 12 is flexibly deformed and separated from the sidewall surface 31c to release the hermetically closed state when the fluid pressure is applied (FIG. 3(b)).

Although the hermetic closure portion 12 shown in FIG. 3 is so arranged that the grooved portion 13 is faced toward the groove bottom surface 31a side, the hermetic closure portion may also be arranged so that the grooved portion 13 is faced opposite to the groove bottom surface 31a as shown in FIG. 4.

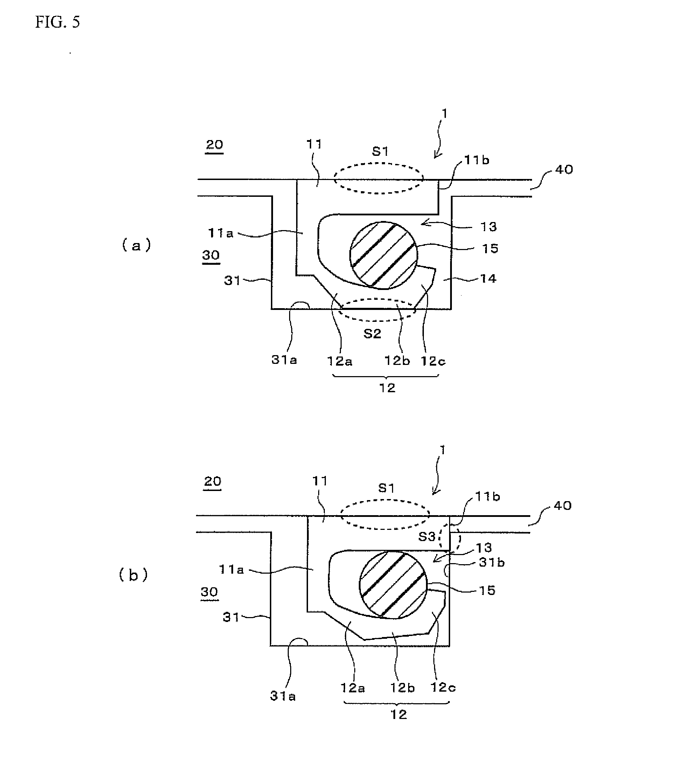

FIG. 5 shows another embodiment of a hermetic confining portion.

The hermetic confining portion in this sealing device 1 comprises an O-ring 15 formed of a rubber-like elastic body provided in the grooved portion 13 separately therefrom. Although the O-ring 15 exerts, by means of a resilient force (tightening force) of itself, an urging force on the hermetic closure portion 12 tending to cause it to abut on the groove bottom surface 31a of the annular groove 31 when the fluid pressure is not applied (FIG. 5(a)), the O-ring 15 is clamped between the seal ring portion 11 and the hermetic closure portion 12 upon flexible deformation of the hermetic closure portion 12 when the fluid pressure is applied, to thereby hermetically confine the grooved portion 13 against a flow of the fluid thereinto (FIG. 5(b)). It is therefore unnecessary to hermetically confine the grooved portion by the tip end of the rising-up portion 12c, so that the tip end portion of the hermetic closure portion 12 is not required to be strictly defined in dimension and shape.

The sealing device 1 shown in FIG. 5 is applicable to a situation where the outer circumferential surface side of the seal ring portion 11 is used as a sliding surface for the sliding member 20.

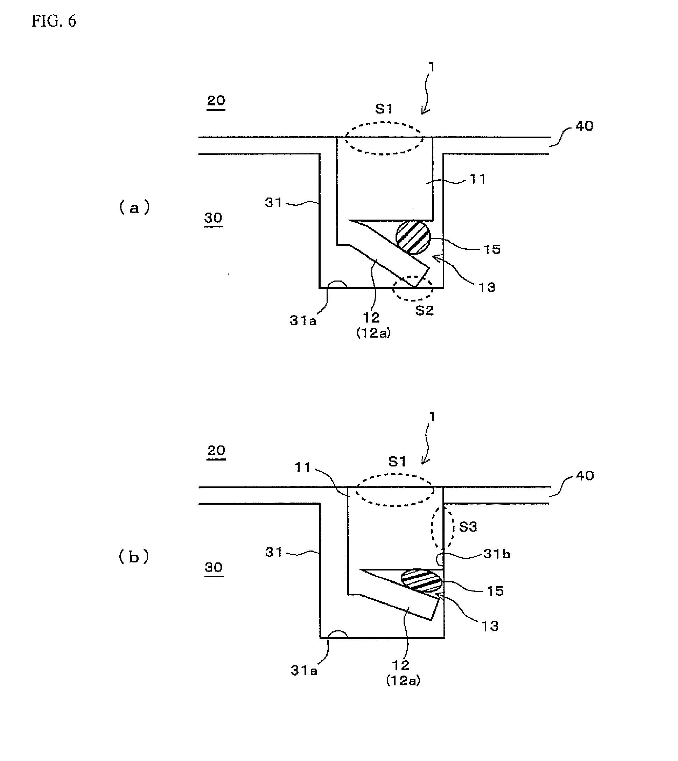

FIG. 6 shows a still further embodiment of a sealing device in case of adopting an O-ring as a hermetic confining portion.

This sealing device 1 is so configured that the hermetic closure portion 12 integrally formed with the seal ring portion 11 is exclusively constituted of an inclined portion 12a obliquely and straightly extending from that side of the seal ring portion 11, which side is faced toward the groove bottom surface 31a, toward the groove bottom surface 31a, and the hermetic closure portion abuts on the groove bottom surface 31a by the tip end of this inclined portion 12a to thereby form a closely contacted area S2 when the fluid pressure is not applied. Such a hermetic closure portion 12 can be formed by cutting into the resin-made seal ring portion 11 at its inner circumferential side or outer circumferential side with a predetermined thickness and by inclining the thus cut portion inwardly or outwardly, respectively, for example.

The O-ring 15 is interposed between the seal ring portion 11 and the hermetic closure portion 12, and in this case, the O-ring 15 is provided to be closely contacted with both the seal ring portion 11 and the hermetic closure portion 12 whether the fluid pressure is applied or not. Thus, the O-ring 15 causes the hermetic closure portion 12 to abut on the groove bottom surface 31a by the resilient force of the O-ring to thereby exert a closely contacting force on the hermetic closure portion when the fluid pressure is not applied (FIG. 6(a)), while the O-ring is compressed by the flexible deformation of the hermetic closure portion 12 by application of the fluid pressure and hermetically confines the grooved portion 13 against a flow of the fluid thereinto when the fluid pressure is applied (FIG. 6(b)).

In this embodiment, the O-ring 15 functions not only to act as the hermetic confining portion, but also to generate the force for closely contacting the hermetic closure portion 12 with the groove bottom surface 31 a when the fluid pressure is not applied. Thus, the hermetic closure portion 12 is not required to possess the closely contacting force, thereby enabling to prolong the lifetime of the sealing device 1.

It is also possible to generate the closely contacting force, by utilizing a reactive elastic force of a spring member, which is separate from the hermetic closure portion 12.

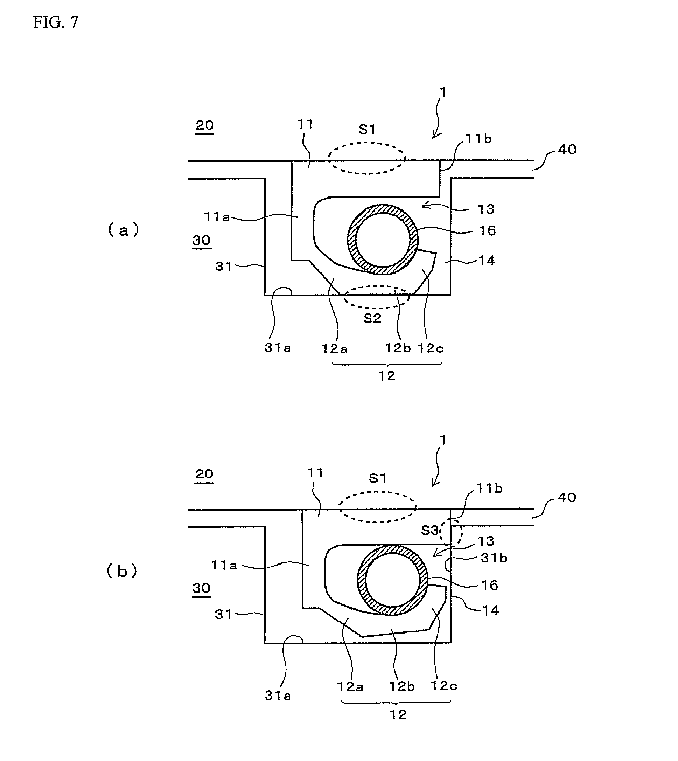

FIG. 7 shows such an embodiment that the sealing device 1 shown in FIG. 1 comprises a cross-sectionally annular spring member 16 disposed in the grooved portion 13 so as to exert an urging force on the hermetic closure portion 12 to abut it on the groove bottom surface 31a of the annular groove 31.

The spring member 16 may be constituted of a coil spring, for example, and the spring member causes the hermetic closure portion 12 to closely contact with the groove bottom surface 31a by means of the reactive elastic force (tightening force) of the spring member itself when the fluid pressure is not applied (FIG. 7(a)), while the spring member is elastically deformed in compliance with the flexible deformation of the hermetic closure portion 12 to thereby terminate the hermetically closed state of the hermetic closure portion 12 with the groove bottom surface 31a when the fluid pressure is applied (FIG. 7(b)). In this way, the closely contacting force of the hermetic closure portion 12 is provided by the spring member 16, thereby enabling to prolong the lifetime of the sealing device 1.

The sealing device 1 shown in FIG. 7 is applicable to a situation where the outer circumferential surface side of the seal ring portion 11 is used as the sliding surface.

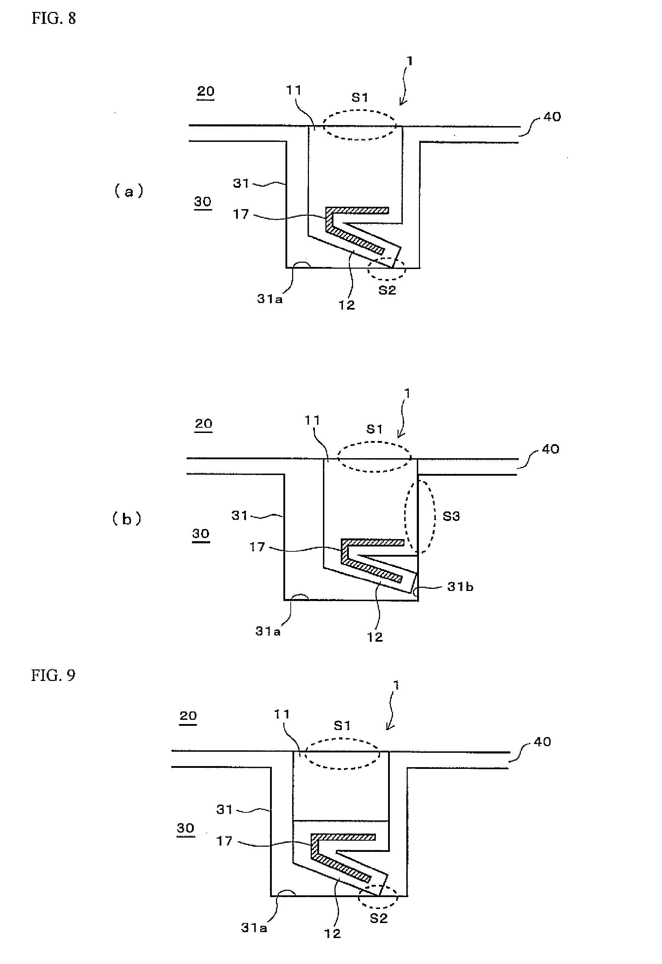

FIG. 8 shows an embodiment comprising a cross-sectionally sideways V-shaped spring member 17 buried in and extended through the seal ring portion 11 and the hermetic closure portion 12, instead of the O-ring 15 of the sealing device 1 shown in FIG. 6.

This spring member 17 causes the hermetic closure portion 12 to closely contact with the groove bottom surface 31a by means of the reactive elastic force (i.e., force tending to open the V shape) of the spring member itself when the fluid pressure is not applied (FIG. 8(a)), while the spring member is elastically deformed in compliance with the flexible deformation of the hermetic closure portion 12 to thereby terminate the hermetically closed state of the hermetic closure portion 12 with the groove bottom surface 31a when the fluid pressure is applied (FIG. 8(b)).

Such a cross-sectionally sideways V-shaped spring member 17 is also applicable to a sealing device in a configuration that the hermetic closure portion 12 is formed of a rubber-like elastic body, which is separate from the seal ring portion 11 and integrally bonded thereto, as shown in FIG. 9. In this case, the hermetic closure portion 12 comprises the rubber-like elastic body, thereby exhibiting an advantage of improved sealability when the fluid pressure is not applied.

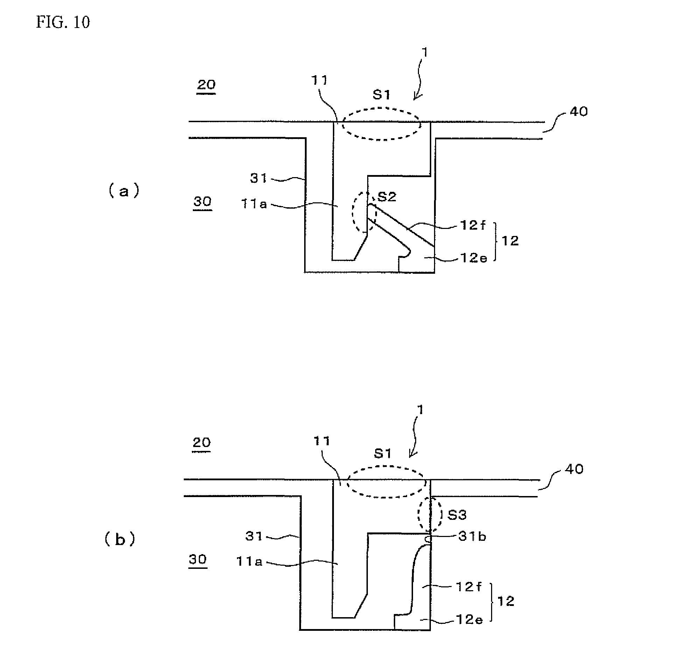

FIG. 10 shows a still another embodiment comprising a seal ring portion, and a hermetic closure portion formed separately therefrom.

This seal ring portion 11 has a flange portion 11a extending from the sliding surface of the seal ring portion with the sliding member 20 toward the groove bottom surface of the annular groove 31, and is fitted in the annular groove 31 such that the axial end of the seal ring portion at the flange portion 11a side is arranged at a high pressure side of the fluid.

In turn, the hermetic closure portion 12 is a rubber-like elastic body separate from the seal ring portion 11, and is formed into a lip shape having an annular base portion 12e arranged to be closely contacted with the groove bottom surface of the annular groove 31, and an inclined portion 12f obliquely extending from an upper portion of the base portion 12e toward the seal ring portion 11 side, in a manner that the hermetic closure portion 12 is arranged at a lower pressure side of the fluid than the flange portion 11 a of the seal ring portion 11. The inclined portion 12f has a tip end arranged to extend from the low pressure side of the flange portion 11a toward an inner surface of the flange portion 11a, such that the tip end of the inclined portion 12f abuts on the inner surface of the flange portion 11a to thereby hermetically close between it and the seal ring portion 11, thereby forming a closely contacted area S2 when the fluid pressure is not applied (FIG. 10(a)). In turn, the hermetic closure portion 12 is flexibly deformed by the fluid pressure when the fluid pressure is applied, such that the tip end of the inclined portion 12f is separated from the flange portion 11a to terminate the hermetically closed state between it and the seal ring portion 11, thereby reducing the sliding resistance (FIG. 10(b)).

In this embodiment, the hermetic closure portion 12 is provided as a part separate from the seal ring portion 11, to thereby facilitate manufacturing.

When the hermetic closure portion is formed separately from the seal ring portion, it is also preferable for the present invention to be embodied in a configuration that the hermetic closure portion has an annular rubber-like elastic body, and a gas-encapsulating portion for retaining a shape of the rubber-like elastic body. Such a gas-encapsulating portion is configured to: retain the rubber-like elastic body in the annular groove, in a shape to hermetically close between the seal ring portion and the annular groove when the fluid pressure is not applied; and be compressed in compliance with deformation of the rubber-like elastic body in a direction for releasing the hermetically closed state between the seal ring portion and the annular groove when the fluid pressure is applied.

This gas-encapsulating portion enables the hermetic closure portion to be more easily deformed at a lower pressure as compared to a hermetic closure portion made of a rubber-like elastic body only, and enables to reduce a possibility of occurrence of tiredness of the hermetic closure portion due to deterioration thereof, thereby enabling to improve the durability of the sealing device.

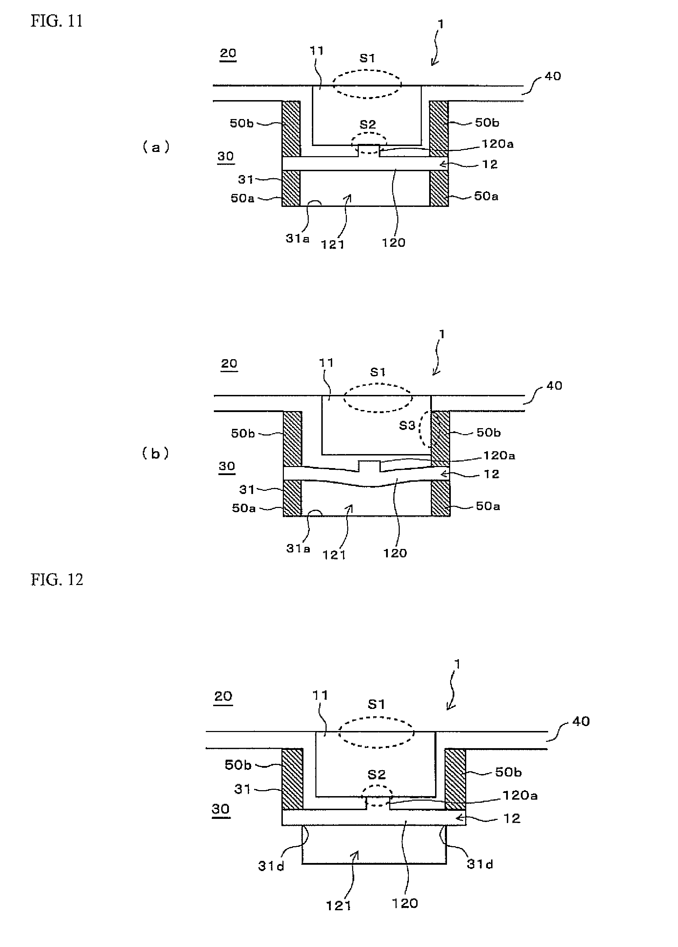

FIG. 11 shows a sealing device having such a gas-encapsulating portion.

In this embodiment, the hermetic closure portion 12 is constituted of a rubber-like elastic body 120 configured separately from the seal ring portion 11, such that the rubber-like elastic body is placed on upper surfaces of two spacing sleeves 50a, 50a fitted on the groove bottom surface 31a in the annular groove 31 in a manner that the rubber-like elastic body covers up the groove bottom surface 31a, and the rubber-like elastic body is clamped, from its upper surface, toward the spacing sleeves 50a, 50a by two fixing sleeves 50b, 50b therebetween, thereby locating the rubber-like elastic body spacedly from the groove bottom surface 31a.

The gas-encapsulating portion 121 is formed by encapsulating a gas in a space portion between the rubber-like elastic body 120 and the groove bottom surface 31a. Although air is typically used as the gas, it is also possible to use nitrogen, an inert gas, or the like, and nitrogen is preferable in view of difficulty of leakage thereof through a rubber.

According to such a sealing device 1, the gas-encapsulating portion 121 retains the shape of the rubber-like elastic body 120 when the fluid pressure is not applied, such that the rubber-like elastic body 120 is closely contacted with the seal ring portion 11 by virtue of the resilient force of the rubber-like elastic body itself, in a manner to form a closely contacted area S2 to thereby prevent occurrence of a leaking flow passage (FIG. 11(a)). In turn, the gas of the gas-encapsulating portion 121 is compressed in compliance with deformation of the rubber-like elastic body 120 when the fluid pressure is applied, so that the rubber-like elastic body 120 is deformed in a direction for releasing the hermetically closed state between it and the seal ring portion, thereby reducing the sliding resistance (FIG. 11(b)).

Preferably, such a rubber-like elastic body 120 is to be formed with a hermetically closing region to be operable when the fluid pressure is not applied, in a shape of cross-sectional protrusion. FIG. 11 shows a protrusion 120a formed on that surface of the rubber-like elastic body 120, which abuts on the seal ring portion 11. This protrusion 120a enables to specify the hermetically closing region, upon hermetically closing the leaking flow passage. Thus, the protrusion 120a can be configured in a shape specialized in hermetic closure, thereby enabling to obtain a stable effect in terms of sealability at a low pressure.

As a technique for fixing the rubber-like elastic body 120 in the annular groove 31, it is possible, instead of adopting the spacing sleeves 50a, 50a, to previously provide the annular groove 31 with stepped portions 31d, 31d for placing the rubber-like elastic body 120 spacedly from the groove bottom surface 31a, and to clamp the rubber-like elastic body 120 by the fixing sleeves 50b, 50b between them and the stepped portions 31d, 31d as shown in FIG. 12. In this case, only fixing sleeves 50b, 50b are required as sleeves, thereby enabling to reduce the number of parts.

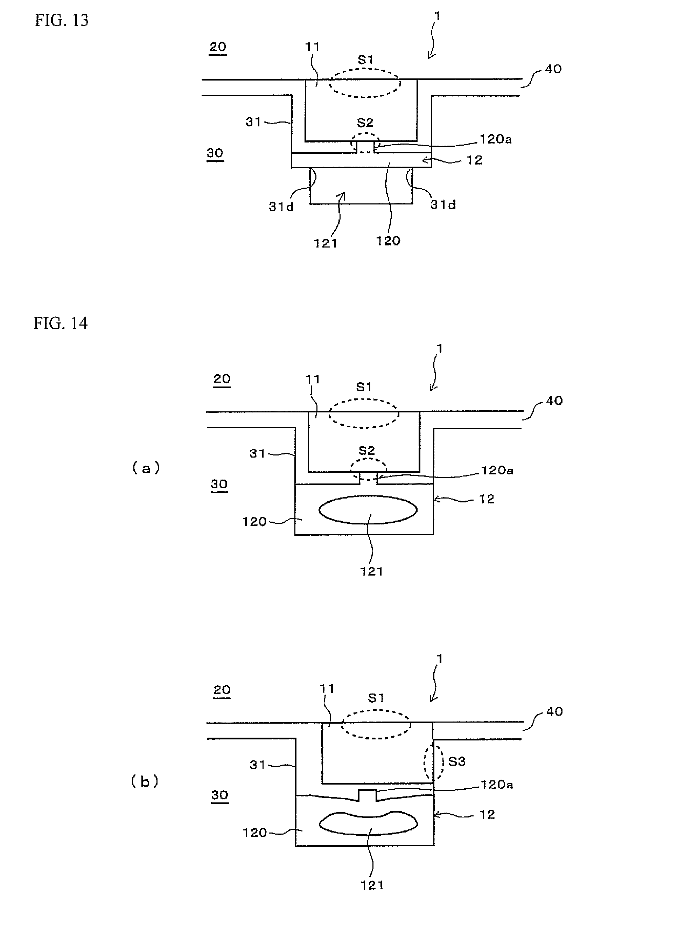

Further, it is possible to fix the rubber-like elastic body 120 by directly bonding it on stepped portions 31d, 31d as shown in FIG. 13. This further eliminates the necessity of the fixing sleeves 50b, 50b, thereby enabling to further reduce the cost.

FIG. 14 shows an embodiment where the rubber-like elastic body 120 is formed into a hollow shape.

In this sealing device 1, the gas-encapsulating portion 121 is formed by encapsulating a gas into the interior of the hollow rubber-like elastic body 120.

According to such a sealing device 1, the gas-encapsulating portion 121 retains the shape of the rubber-like elastic body 120 when the fluid pressure is not applied, such that the rubber-like elastic body 120 is closely contacted with the seal ring portion 11 by virtue of the resilient force of the rubber-like elastic body itself, in a manner to form a closely contacted area S2 to thereby prevent occurrence of a leaking flow passage (FIG. 14(a)). In turn, the gas of the gas-encapsulating portion 121 is compressed in compliance with deformation of the rubber-like elastic body 120 when the fluid pressure is applied, so that the rubber-like elastic body 120 is deformed in a direction for releasing the hermetically closed state between it and the seal ring portion, thereby reducing the sliding resistance (FIG. 14(b)).

Additionally, this embodiment eliminates the necessity of sleeves as shown in FIG. 11 and FIG. 12, and also has an advantage that the operation for fitting the hermetic closure portion 12 into the annular groove 31 is facilitated.

It is also possible to provide the hollow rubber-like elastic body 120 in a configuration integrally bonded to the seal ring portion 11.

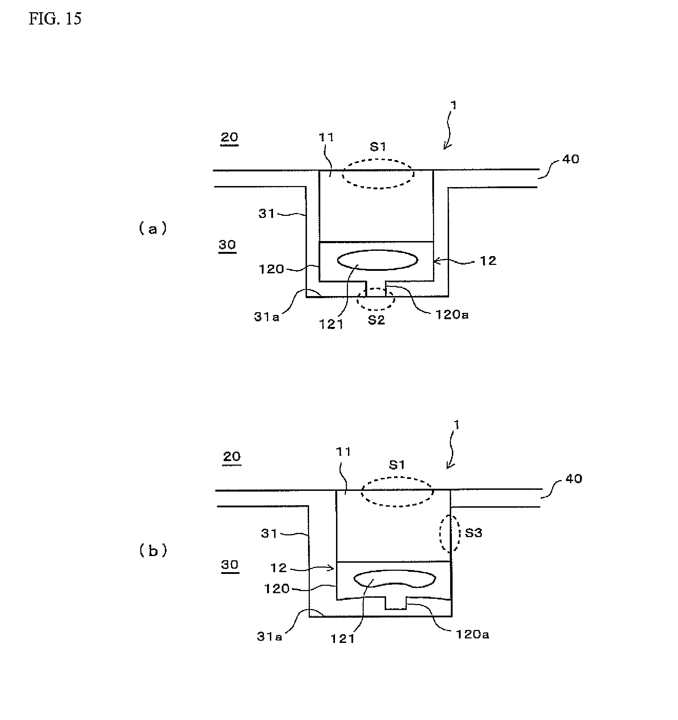

In FIG. 15, the hermetic closure portion 12 shown in FIG. 14 is integrally bonded to that circumferential surface of the seal ring portion 11 which is placed at the groove bottom surface 31a side, in a manner that the protrusion 120a is closely contacted with the groove bottom surface 31a to thereby form a closely contacted area S2 when the fluid pressure is not applied (FIG. 15(a)). Thus, the closely contacted area S2 is separated from the groove bottom surface 31a when the fluid pressure is applied, such that the hermetic closure portion is deformed in a direction for releasing the hermetically closed state, thereby reducing the sliding resistance (FIG. 15(b)).

Such a hermetic closure portion 12 having the hollow rubber-like elastic body 120 may also be juxtaposed with an axial end of the seal ring portion 11.

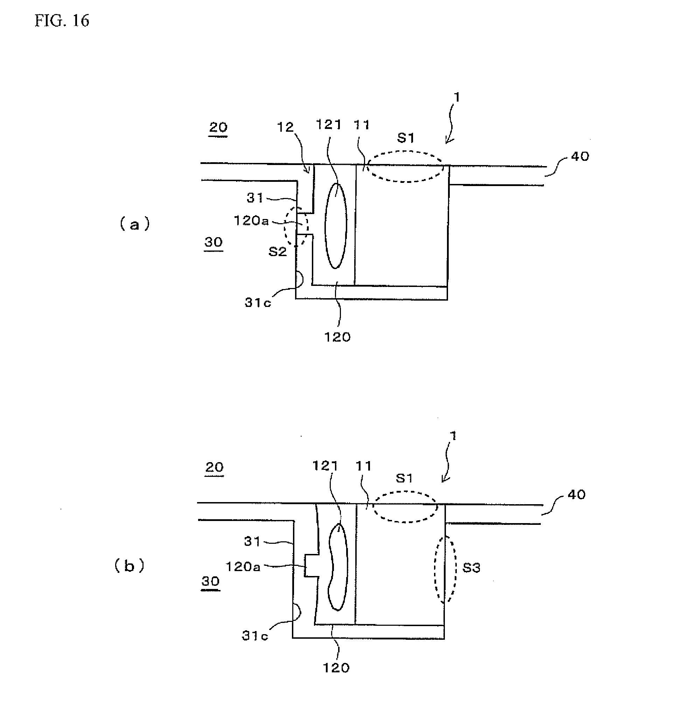

FIG. 16 shows an embodiment of a sealing device where the hermetic closure portion 12 is juxtaposed with an axial end of the seal ring portion 11, such that the hermetic closure portion 12 is arranged at a high pressure side of the fluid in the axial direction of the seal ring portion 11 in a manner to fit the sealing device in the annular groove 31.

The hermetic closure portion 12 is so configured that, the protrusion 120a of the rubber-like elastic body 120 is closely contacted with the sidewall surface 31c of the annular groove 31 at the high pressure side in a manner to form a closely contacted area S2 to thereby prevent a leaking flow passage when the fluid pressure is not applied (FIG. 16(a)), while the gas-encapsulating portion 121 is compressed to deform the hermetic closure portion 12 so that the protrusion 120a is separated from the sidewall surface 31c to thereby terminate the hermetically closed state, thereby reducing the sliding resistance when the fluid pressure is applied (FIG. 16(b)).

## Claims

1. A sealing device to be fitted in an annular groove formed in one of a housing and a shaft as sliding members, respectively, where the housing has a shaft hole, and the shaft is inserted through the shaft hole and is configured to conduct a sliding movement relative to the housing, so that the sealing device seals an annular clearance between the housing and the shaft from a fluid;
wherein the sealing device comprises: a seal ring portion having a sliding surface configured to be slid with the mating sliding member, and to seal the annular clearance when a fluid pressure is applied to the sealing device; and a hermetic closure portion for hermetically closing between the seal ring portion and the annular groove when the fluid pressure is not applied to the sealing device; and
wherein the hermetic closure portion is provided to be deformable in a direction for releasing the hermetically closed state between the seal ring portion and the annular groove, by means of the fluid pressure when the fluid pressure is applied to the sealing device.

2. The sealing device according to claim 1, wherein the hermetic closure portion is formed in a shape of a lip obliquely extending from the seal ring portion toward an inner wall surface of the annular groove; and
wherein the lip-shaped hermetic closure portion is provided: to be abutted on the inner wall surface of the annular groove to thereby hermetically close between the seal ring portion and the annular groove when the fluid pressure is not applied; and to be flexibly deformable in a direction for releasing the hermetically closed state between the seal ring portion and the annular groove, when the fluid pressure is applied.

3. The sealing device according to claim 2, further comprising a hermetic confining portion for hermetically confining a groove portion defined between the seal ring portion and the hermetic closure portion, upon flexible deformation of the hermetic closure portion when the fluid pressure is applied.

4. The sealing device according to claim 3, wherein the hermetic confining portion is constituted of a tip end portion of the hermetic closure portion; and
wherein the tip end portion is formed so that the tip end portion is abutted on the inner wall surface of the annular groove to thereby hermetically confine the groove portion, between the tip end portion and the inner wall surface, against a flow of the fluid into the groove portion, upon flexible deformation of the hermetic closure portion when the fluid pressure is applied.

5. The sealing device according to claim 3, wherein the hermetic confining portion comprises an O-ring provided in the grooved portion separately therefrom; and
wherein the O-ring is formed so that the O-ring is clamped between the seal ring portion and the hermetic closure portion to thereby hermetically confine the groove portion against a flow of the fluid thereinto, upon flexible deformation of the hermetic closure portion when the fluid pressure is applied.

6. The sealing device according to claim 2, further comprising a cross-sectionally annular spring member, disposed in a groove portion defined between the seal ring portion and the hermetic closure portion, so as to exert an urging force on the hermetic closure portion to abut it on a groove bottom surface of the annular groove.

7. The sealing device according to claim 2, further comprising a cross-sectionally sideways V-shaped spring member buried in and extended through the seal ring portion and the hermetic closure portion, so as to urge the hermetic closure portion toward the inner wall surface of the annular groove.

8. The sealing device according to any one of claims 1 to 7, wherein the hermetic closure portion is formed of a rubber-like elastic body, which is separate from the seal ring portion and which is integrally bonded to the seal ring portion.

9. The sealing device according to any one of claims 1 to 8, wherein the hermetic closure portion is arranged at that side of the seal ring portion which is faced to a groove bottom surface of the annular groove, so as to hermetically close between the seal ring portion and the groove bottom surface of the annular groove when the fluid pressure is not applied.

10. The sealing device according to any one of claims 1 to 8, wherein the hermetic closure portion is juxtaposed with the seal ring portion in an axial direction thereof, so as to hermetically close between the seal ring portion and a sidewall surface of the annular groove when the fluid pressure is not applied.

11. The sealing device according to claim 1, wherein the seal ring portion has a flange portion extending, from the sliding surface configured to be slid with the mating sliding member, toward a groove bottom surface of the annular groove;
wherein the hermetic closure portion comprises a rubber-like elastic body which is separate from the seal ring portion and which is formed into a lip shape obliquely extending from the groove bottom surface of the annular groove toward an inner surface of the flange portion; and
wherein the lip-shaped hermetic closure portion is provided: to be abutted on the inner surface of the flange portion to thereby hermetically close between the seal ring portion and the annular groove when the fluid pressure is not applied; and to be separated from the flange portion in a manner to be flexibly deformable in a direction for releasing the hermetically closed state between the seal ring portion and the annular groove, when the fluid pressure is applied.

12. The sealing device according to claim 1, wherein the hermetic closure portion comprises an annular rubber-like elastic body, and a gas-encapsulating portion for retaining a shape of the rubber-like elastic body; and
wherein the gas-encapsulating portion is configured to: retain the rubber-like elastic body in the annular groove, in a shape to hermetically close between the seal ring portion and the annular groove when the fluid pressure is not applied; and be compressed in compliance with deformation of the rubber-like elastic body in a direction for releasing the hermetically closed state between the seal ring portion and the annular groove when the fluid pressure is applied.

13. The sealing device according to claim 12, wherein the rubber-like elastic body is arranged between the seal ring portion and a groove bottom surface of the annular groove to thereby cover up the groove bottom surface; and
wherein the gas-encapsulating portion is formed by encapsulating a gas between the rubber-like elastic body and the groove bottom surface.

14. The sealing device according to claim 12, wherein the rubber-like elastic body is formed to be hollow; and
wherein the gas-encapsulating portion is formed by encapsulating a gas in the interior of the rubber-like elastic body.

15. The sealing device according to claim 14, wherein the hermetic closure portion is provided separately from the seal ring portion, at that side of the seal ring portion which is faced to a groove bottom surface of the annular groove, and the hermetic closure portion hermetically closes between the seal ring portion and an inner wall surface of the annular groove when the fluid pressure is not applied.

16. The sealing device according to claim 14, wherein the hermetic closure portion is integrally bonded to the seal ring portion, so as to hermetically close between it and the inner wall surface of the annular groove when the fluid pressure is not applied.

17. The sealing device according to claim 16, wherein the hermetic closure portion is integrally bonded to that circumferential surface of the seal ring portion which is faced to a groove bottom surface of the annular groove, and the hermetic closure portion hermetically closes between the seal ring portion and the groove bottom surface of the annular groove when the fluid pressure is not applied.

18. The sealing device according to claim 16, wherein the hermetic closure portion is juxtaposed with the seal ring portion in an axial direction thereof and integrally bonded thereto, and the hermetic closure portion hermetically closes between the seal ring portion and a sidewall surface of the annular groove when the fluid pressure is not applied.

19. The sealing device according to any one of claims 12 to 18, wherein the rubber-like elastic body is formed with a hermetically closing region in a shape of cross-sectional protrusion to be operable when the fluid pressure is not applied.
